# EUROPEAN PATENT APPLICATION

(11) **EP 4 571 378 A1**
(43) Date of publication of application: **18.06.2025**
(21) Application number: 23858776.0
(22) Date of filing: 05.06.2023
(51) Int. Cl.: G02B 6/42, H05K 7/20

(54) **OPTICAL MODULE HOUSING AND MANUFACTURING METHOD THEREFOR, AND OPTICAL MODULE AND OPTICAL COMMUNICATION DEVICE**

(30) Priority: 31.08.2022 CN 202211056496
(71) Applicant: Huawei Technologies Co., Ltd., Shenzhen, Guangdong 518129 (CN)
(72) Inventor: WEI, Xiaoyun, Shenzhen, Guangdong 518129 (CN); YANG, Yong, Shenzhen, Guangdong 518129 (CN); DENG, Chaojun, Shenzhen, Guangdong 518129 (CN)
(74) Representative: Isarpatent
(86) International application number: PCT/CN2023/098230
(87) International publication number: WO 2024/045737

(57) **Abstract**

This application discloses an optical module housing and a manufacturing method thereof, an optical module, and an optical communication device, and belongs to the field of optical modules. The optical module housing includes a housing body and a plating layer, where the plating layer is located on a surface of the housing body, a roughness Ra of the plating layer at least in a contact area does not exceed 0.6 µm, and the contact area is an area that is of the optical module housing and that is configured to be in contact with a heat sink. According to this application, the roughness Ra of the plating layer in the contact area is set not to exceed 0.6 µm, so that when the optical module is connected to an optical module connector, a gap between the contact area of the optical module housing and the heat sink is smaller. This reduces a thermal contact resistance, facilitates heat exchange between the optical module housing and the heat sink, accelerates heat dissipation of the optical module, and avoids an excessively high temperature of the optical module.

## Description

This application claims priority to Chinese Patent Application No. 202211056496.5, filed with the China National Intellectual Property Administration on August 31, 2022 and entitled "OPTICAL MODULE HOUSING AND MANUFACTURING METHOD THEREOF, OPTICAL MODULE, AND OPTICAL COMMUNICATION DEVICE", which is incorporated herein by reference in its entirety.

### TECHNICAL FIELD

Embodiments of this application relate to the field of optical modules, and in particular, to an optical module housing and a manufacturing method thereof, an optical module, and an optical communication device.

### BACKGROUND

An optical module is an important component in optical communication, and is configured to perform mutual conversion between an optical signal and an electrical signal. With rapid development of technologies such as cloud computing, big data, 5G, and self-driving, power of the optical module is higher, and consequently, heat generated by the optical module is higher.

The optical module is inserted into an optical module connector during use, and the optical module housing contacts a heat sink of the optical module connector for heat dissipation.

The contact between the optical module housing and the heat sink has a great impact on heat dissipation of the optical module. If there is a large gap, heat exchange between the optical module housing and the heat sink is affected, causing an excessively high temperature of the optical module, and affecting performance and a service life of the optical module.

### SUMMARY

This application provides an optical module housing and a manufacturing method thereof, an optical module, and an optical communication device, to facilitate good contact between the optical module housing and a heat sink, facilitate heat exchange between the optical module housing and the heat sink, and improve a heat dissipation effect. The technical solutions are as follows.

According to a first aspect, an optical module housing is provided. The optical module housing has a contact area, and the contact area is an area that is of the optical module housing and that is configured to be in contact with a heat sink mounted on an optical module connector when an optical module is connected to the optical module connector. The optical module housing includes a housing body and a plating layer, and the plating layer is located on a surface of the housing body, and a roughness Ra of the plating layer at least in the contact area does not exceed 0.6 µm.

Based on the foregoing features, the roughness Ra of the plating layer in the contact area is set not to exceed 0.6 µm, so that when the optical module is connected to the optical module connector, a gap between the contact area of the optical module housing and the heat sink is smaller. This reduces a thermal contact resistance, facilitates heat exchange between the optical module housing and the heat sink, accelerates heat dissipation of the optical module, and avoids an excessively high temperature of the optical module.

Optionally, a hardness of the plating layer is not less than 900 HV0.1. By disposing the plating layer with a high hardness, the optical module housing can have high abrasion resistance.

For example, the hardness of the plating layer is 950 HV0.1.

In addition, a thickness of the plating layer is 1 µm to 20 µm. For example, the thickness of the plating layer is 10 µm. A thickness of the plating layer affects abrasion resistance and corrosion resistance of the optical module housing. If the thickness is set to an excessively thin value, improvement of the abrasion resistance and the corrosion resistance is not evident. If the thickness is set to an excessively thick value, manufacturing costs of the optical module housing are increased.

The hardness of the plating layer is 7.9 g/cm³ to 8.5 g/cm³. For example, a hardness of 8.0 g/cm³ enables the plating layer to be dense enough to better protect the optical module housing.

In some examples, an anti-fingerprint structure is provided on an outer surface of the optical module housing.

Based on the foregoing features, the surface of the optical module housing may not be scratched, and the surface of the optical module housing may not be stained by a fingerprint. Because the plating layer has the low roughness and is smooth, a fine scratch is easily formed, and consequently the surface of the optical module housing is scratched. Traces such as a fingerprint and a palm print are also easily formed on a surface of the plating layer, and the anti-fingerprint structure can avoid these problems.

In an example, the surface of the plating layer is a frosted surface, and the anti-fingerprint structure includes the frosted surface.

The surface of the plating layer is dented or bulged through frosting treatment to become the frosted surface. The frosted surface can avoid a scratch on the surface of the plating layer, and can also prevent the surface of the plating layer from being stained by a fingerprint. This improves appearance quality of the optical module.

In another example, the anti-fingerprint structure includes an anti-fingerprint film, and the anti-fingerprint film is located on the surface of the plating layer.

For example, the anti-fingerprint film includes, but is not limited to, a nanoparticle coating, a self-assembled monomolecular film, and an oxide coating.

Based on the foregoing features, the anti-fingerprint film on the surface of the plating layer can also avoid a scratch on the surface of the optical module housing, and avoid staining on the surface of the optical module housing to form traces such as a fingerprint and a palm print. This improves the appearance quality of the optical module.

According to a second aspect, a method for manufacturing an optical module housing is provided. The optical module housing has a contact area, the contact area is configured to be in contact with a heat sink, and the manufacturing method includes:
providing a housing body; and forming a plating layer on a surface of the housing body, where a roughness Ra of the plating layer at least in the contact area does not exceed 0.6 µm.

Based on the foregoing features, the roughness Ra of the plating layer in the contact area is set not to exceed 0.6 µm, so that when an optical module is connected to an optical module connector, a gap between the contact area of the optical module housing and the heat sink is smaller. This reduces a thermal contact resistance, facilitates heat exchange between the optical module housing and the heat sink, accelerates heat dissipation of the optical module, and avoids an excessively high temperature of the optical module.

In some examples, before the forming a plating layer on a surface of the housing body, the surface of the housing body is first polished. The surface of the housing body is polished, so that a roughness Ra of the housing body at least in the contact area does not exceed 0.6 µm.

For example, mechanical polishing or laser polishing is performed on the surface of the housing body.

Based on the foregoing features, the housing body is first polished before the plating layer is formed on the surface of the housing body, to reduce the roughness of the housing body, so that the plating layer formed on the surface of the housing body is smoother and has a lower roughness.

In some other examples, no polishing is performed before the plating layer is formed on the surface of the housing body, and after the plating layer is formed on the surface of the housing body, the plating layer formed on the housing body is polished.

For example, the mechanical polishing or the laser polishing is performed on the plating layer formed on the housing body.

Based on the foregoing features, because no polishing is performed before the plating layer is formed, the surface of the housing body is rough, and therefore the formed plating layer can be more closely combined with the housing body. After the plating layer is formed, the plating layer is polished, to reduce the roughness of the formed plating layer.

Optionally, after the plating layer is formed, annealing is further performed on the plating layer, to improve a hardness of the plating layer. This improves abrasion resistance of the optical module housing.

In an example, after the plating layer is annealed, frosting treatment is performed on the plating layer.

A surface of the plating layer can be changed to a frosted surface through the frosting treatment. In this way, the frosted surface can avoid a scratch on the surface of the plating layer, and can also prevent the surface of the plating layer from being stained by a fingerprint. This improves appearance quality of the optical module.

In another example, after the plating layer is annealed, an anti-fingerprint film is formed on the surface of the plating layer.

The anti-fingerprint film is formed on the surface of the plating layer, so that the surface of the optical module housing may not be scratched, the surface of the optical module housing may not be stained, and traces such as a fingerprint and a palm print are not formed. This improves the appearance quality of the optical module.

According to a third aspect, an optical module is provided. The optical module includes a circuit board and the optical module housing according to the first aspect, and the circuit board is located in the optical module housing.

According to a fourth aspect, an optical communication device is provided. The optical communication device includes an optical module connector and the optical module according to the third aspect, and the optical module is connected to the optical module connector. A side wall of the optical module connector has an opening, and a heat sink mounted on the side wall of the optical module connector contacts an optical module housing through the opening, so that a gap between the optical module housing and the heat sink is smaller. This reduces a thermal contact resistance, facilitates heat exchange between the optical module housing and the heat sink, accelerates heat dissipation of the optical module, and avoids an excessively high temperature of the optical module.

In an example, the optical communication device further includes a mainboard and the heat sink. The optical module connector is connected to the mainboard, the heat sink is connected to the optical module connector, and a boss of the heat sink is located in the opening and contacts a surface of the optical module housing.

### BRIEF DESCRIPTION OF DRAWINGS

FIG. 1 is a schematic diagram of a structure of an optical module according to an embodiment of this application;
FIG. 2 is a schematic diagram of a partial structure of an optical communication device according to an embodiment of this application;
FIG. 3 is a schematic diagram of a cross section of an optical module housing according to an embodiment of this application;
FIG. 4 is a schematic diagram of a cross section of an optical module housing according to an embodiment of this application;
FIG. 5 is a flowchart of a method for manufacturing an optical module housing according to an embodiment of this application;
FIG. 6 is a flowchart of a method for manufacturing an optical module housing according to an embodiment of this application;
FIG. 7 is a schematic diagram of a manufacturing process of an optical module housing according to an embodiment of this application;
FIG. 8 is a flowchart of a method for manufacturing an optical module housing according to an embodiment of this application; and
FIG. 9 is a schematic diagram of a manufacturing process of an optical module housing according to an embodiment of this application.

### Reference numerals:

10: Optical module
11: Optical module housing; 11a: Contact area
110: Housing body; 111: Upper housing; 112: Lower housing
1101: Upper housing body; 1102: Lower housing body
120: Plating layer
130: Anti-fingerprint film
20: Optical module connector; 20a: Socket; 20b: Opening
30: Heat sink; 31: Boss; 32: Heat sink body; 33: Heat dissipation structure
40: Mainboard

### DESCRIPTION OF EMBODIMENTS

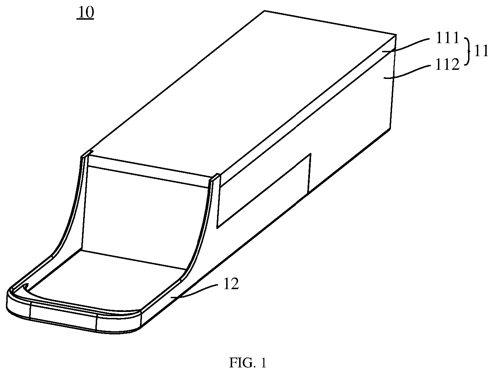

FIG. 1 is a schematic diagram of a structure of an optical module according to an embodiment of this application. For example, the optical module 10 may be, but is not limited to, a small form-factor pluggable transceiver (small form-factor pluggable transceiver, SFP), a four-channel small package pluggable transceiver (quad small form-factor pluggable transceiver, QSFP), or a C form-factor pluggable transceiver (C form-factor pluggable transceiver, CFP). As shown in FIG. 1, the optical module 10 includes an optical module housing 11 and a circuit board (not shown in FIG. 1). An electronic component, such as a related chip or light source, is connected to the circuit board. One end of the optical module housing 11 has an interface, and during use, the end at which the interface of the optical module housing 11 is located is inserted into an optical module connector.

In an example, the optical module 10 shown in FIG. 1 further includes a handle 12, and the handle 12 is located at an end that is of the optical module housing 11 and that is far away from the interface. The handle 12 is configured to facilitate insertion and removal of the optical module 10. In another example, the optical module 10 may alternatively have no handle 12.

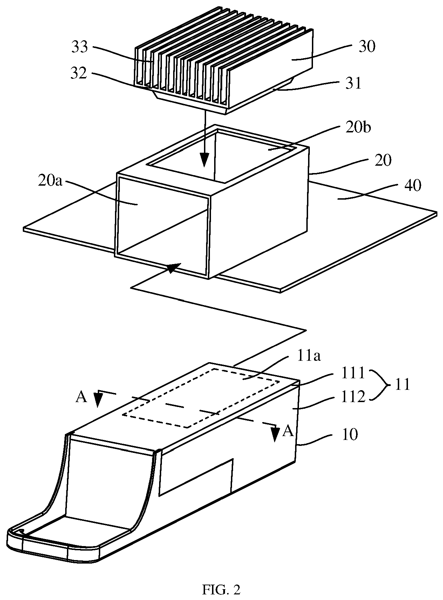

FIG. 2 is a schematic diagram of a partial structure of an optical communication device according to an embodiment of this application. As shown in FIG. 2, the optical communication device includes an optical module 10, an optical module connector 20, a heat sink 30, and a mainboard 40. The optical module connector 20 is also referred to as an optical cage. The optical module connector 20 is connected to the mainboard 40, where the mainboard 40 may be a printed circuit board, and the optical module connector 20 is welded to the mainboard 40. The optical module 10 is connected to the optical module connector 20. FIG. 2 shows a process of connecting the optical module 10 to the optical module connector 20. One end of the optical module connector 20 has a socket 20a, and the optical module 10 is inserted into the socket 20a. A side wall of the optical module connector 20 has an opening 20b.

The heat sink 30 includes a heat sink body 32, a boss 31, and a plurality of heat dissipation structures 33. The boss 31 and the heat dissipation structures 33 are respectively located on two opposite sides of the heat sink body 32. The heat sink 30 is connected to the optical module connector 20, for example, by using a buckle. The boss 31 of the heat sink 30 extends into the opening 20b, and a bottom surface of the boss 31 contacts an optical module housing 11 of the optical module 10, so that heat generated by the optical module 10 can be conducted to the heat sink 30.

In an example, in this embodiment of this application, the heat dissipation structure 33 is a heat dissipation fin. In another example, the heat dissipation structure 33 may alternatively be a columnar heat sink fin.

The heat sink 30 may be a metal mechanical part, for example, aluminum or aluminum alloy. The heat sink body 32, the boss 31, and the plurality of heat dissipation structures 33 may be an integrally formed structure, or may be a welded structure.

There is a specific friction force requirement between the optical module 10 and the optical module connector 20, to prevent the optical module 10 from being loose. For example, when the optical module 10 is inserted, a needed action force is about 40 N, and when the optical module 10 is removed from the optical module connector 20, a needed action force is about 30 N. In other words, an action force of more than 40 N needs to be applied to insert the optical module 10 in position, and an action force of more than 30 N needs to be applied to remove the optical module 10. For different optical modules 10, needed action forces may also be different, and 40 N and 30 N herein are merely used as examples.

The optical module housing 11 has a contact area 11a, and the contact area 11a is an area that is of the optical module housing and that is configured to be in contact with the heat sink. The optical module housing 11 may include an upper housing 111 and a lower housing 112 that are arranged oppositely. The upper housing 111 is connected to the lower housing 112, and the contact area 11a is located in the upper housing 111. In some examples, the upper housing 111 and the lower housing 112 are separated components, and the upper housing 111 and the lower housing 112 are detachably connected or fixedly connected. In some other examples, the upper housing 111 and the lower housing 112 are an integrated component, namely, a whole. The optical module 10 is inserted into the optical module connector 20, and the contact area 11a is in close contact with the boss 31. Heat generated in a working process of the optical module 10 is transferred to the boss 31, and dissipated by using the heat sink 30. Closer contact between the optical module housing 11 and the boss 31 is more favorable to heat exchange between the optical module housing 11 and the boss 31. On the contrary, a larger gap between the optical module housing 11 and the boss 31 is more unfavorable to heat dissipation of the optical module 10. For an optical module 10 with low power, even if there is an evident gap between the optical module housing 11 and the heat sink 30, a heat dissipation effect can also avoid an excessively high temperature of the optical module 10. However, with continuous development of this technology, power of the optical module 10 is higher, and consequently, a temperature of the optical module 10 is easily excessively high, and a service life is affected.

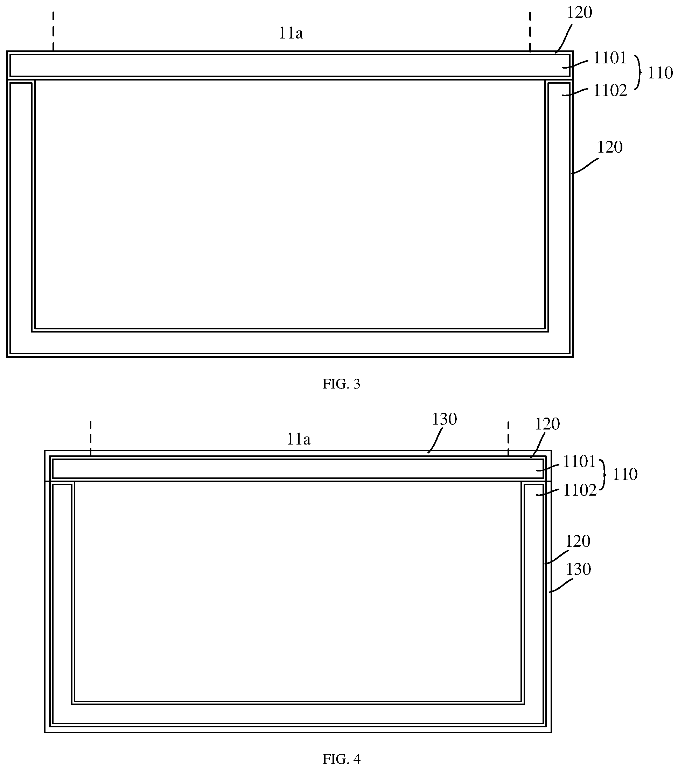

FIG. 3 is a schematic diagram of a cross section of an optical module housing according to an embodiment of this application. The cross section is an A-A cross section in FIG. 2. As shown in FIG. 3, the optical module housing 11 includes a housing body 110 and a plating layer 120, where the plating layer 120 is located on a surface of the housing body 110, and a roughness Ra of the plating layer 120 at least in a contact area 11a does not exceed 0.6 µm.

Usually, a roughness Ra of an outer surface of the optical module housing 11 is 1.6 µm. For an optical module with high power, a thermal contact resistance between the optical module housing 11 and a heat sink 30 is large, and consequently, a temperature of the optical module is easily excessively high in a working process. In this embodiment of this application, the roughness Ra of the plating layer 120 in the contact area 11a is set not to exceed 0.6 µm, so that a gap between the optical module housing 11 and the heat sink 30 is smaller. This reduces the thermal contact resistance, facilitates heat exchange between the optical module housing 11 and the heat sink 30, accelerates heat dissipation of the optical module, and avoids the excessively high temperature of the optical module.

Because the roughness Ra of the plating layer 120 is lower, a friction coefficient is reduced, and therefore a friction force applied to the optical module 10 is reduced. The heat sink 30 is usually connected to an optical module connector 20 by using a buckle. After the roughness of the plating layer 120 is reduced, the heat sink 30 and the optical module connector 20 may be connected by using a tighter buckle, to increase pressure between the contact area 11a and the heat sink 30, so that there is still a sufficient friction force between the optical module and the optical module connector. However, increasing the pressure between the contact area 11a and the heat sink 30 can further reduce the gap between the contact area 11a and the heat sink 30. This facilitates the heat exchange between the optical module housing 11 and the heat sink 30, and accelerates the heat dissipation of the optical module.

In the example shown in FIG. 2, the optical module 10 has one contact area 11a. In some other examples, the optical module 10 may alternatively have a plurality of contact areas 11a. The plurality of contact areas 11a may be located on a same side wall of the optical module housing 11, or may be located on different side walls of the optical module housing 11. For the optical module 10 having the plurality of contact areas 11a, an optical module connector 20 adapted to the optical module 10 may have a plurality of openings 20b, and may be mounted with a plurality of heat sinks 30. Bosses 31 of the plurality of heat sinks 30 are respectively located in the plurality of openings 20b, to be in contact with the plurality of contact areas 11a respectively.

In some examples, a same side wall of the optical module connector 20 may have two or more openings 20b. One heat sink 30 may have two or more bosses 31, and the bosses 31 of a heat sink 31 are respectively located in openings 20b of the optical module connector 20.

The housing body 110 is an aluminum mechanical part, a zinc mechanical part, or a copper mechanical part, and is soft in texture. The plating layer 120 can play a protection role, and improve a hardness of the optical module housing 11, to improve abrasion resistance of the optical module housing 11. The plating layer 120 may be located on an upper housing 111, or may be located on an upper housing 111 and a lower housing 112.

The foregoing manufacturing materials of the housing body 110 are merely examples. In another example, the housing body 110 may alternatively be manufactured by using another material.

In an example, the plating layer 120 may cover all surfaces of the housing body 110, and the all surfaces of the housing body 110 include an inner surface and the outer surface of the housing body 110.

The roughness Ra of the plating layer 120 covering the outer surface of the housing body 110 does not exceed 0.6 µm. Because the plating layer 120 covering the inner surface of the housing body 110 are not in contact wich the heat sink 30, even if the roughness Ra exceeds 0.6 µm, the heat exchange between the optical module housing and the heat sink 30 is not affected. Unless otherwise specified, in this embodiment of this application, a surface of the plating layer 120 is a surface of the plating layer 120 located on the outer surface of the housing body 110.

It is clear that in order to facilitate heat exchange, in the optical module 10, between a component in the optical module housing 11 and the optical module housing 11, the roughness Ra of the plating layer 120 covering the inner surface of the housing body 110 may also not exceed 0.6 µm, so that the component in the optical module housing 11 can be in closer contact with the inner surface of the optical module housing 11.

In some examples, the plating layer 120 may be a nickel plating layer. The nickel plating layer can enable the optical module housing 11 to have high corrosion resistance. This helps prolong a service life of the optical module.

In another example, the plating layer 120 may alternatively be a plating layer formed by another material, for example, a chromium plating layer or another plating layer having abrasion resistance and corrosion resistance. The chromium plating layer also has a high hardness and corrosion resistance, and can also prolong the service life of the optical module.

For example, the hardness of the plating layer 120 is not less than 900 HV0.1, and the high hardness is set, so that the optical module housing 11 can have high abrasion resistance.

A thickness of the plating layer 120 may be 1 µm to 20 µm. The thickness of the plating layer 120 affects the abrasion resistance and corrosion resistance of the optical module housing 11. If the thickness is set to an excessively thin value, improvement of the abrasion resistance and the corrosion resistance is not evident. If the thickness is set to an excessively thick value, manufacturing costs are increased.

Density of the plating layer 120 may be greater than or equal to 7 g/cm³, for example, 7.9 g/cm³ to 8.5 g/cm³, so that the plating layer 120 is dense enough to better protect the optical module housing.

Optionally, an anti-fingerprint structure is further provided on the outer surface of the optical module housing.

Because the roughness Ra of the plating layer 120 is low and the plating layer 120 is smooth, a fine scratch is easily formed on the surface of the plating layer 120 in a process of insertion and removal of the optical module, and consequently, the surface of the optical module housing 11 is scratched. Traces such as a fingerprint or a palm print are also easily formed on the surface of the plating layer 120. By using the anti-fingerprint structure, the surface of the optical module housing 11 may not be scratched, and the surface of the optical module housing 11 may not be stained by the fingerprint.

In some examples, the surface of the plating layer 120 is a frosted surface, and the anti-fingerprint structure includes the frosted surface.

To be specific, through frosting treatment performed on the surface of the plating layer 120, the surface of the plating layer 120 is dented or bulged to become the frosted surface. The frosted surface can avoid the scratch on the surface of the plating layer 120, and can also prevent the surface of the plating layer 120 from being stained by the fingerprint. This improves appearance quality of the optical module.

Aroughness Ra of the frosted surface does not exceed 0.6 µm, so that the gap between the optical module housing 11 and the heat sink 30 is small, and the heat exchange can still be performed quickly between the optical module housing 11 and the heat sink 30.

In some other examples, for example, as shown in FIG. 4, the anti-fingerprint structure includes an anti-fingerprint film 130. The anti-fingerprint film 130 is located on the surface of the plating layer 120.

The anti-fingerprint film 130 is disposed on the surface of the plating layer 120, so that the surface of the optical module housing 11 may not be scratched, and the surface of the optical module housing 11 may not be stained, and traces such as a fingerprint and a palm print may not be formed. This improves the appearance quality of the optical module.

For example, the anti-fingerprint film 130 may include, but is not limited to, a nanoparticle coating, a self-assembled monomolecular film, and an oxide coating.

The anti-fingerprint film 130 may cover a part of or all areas on the surface of the plating layer 120. For example, all the areas on the surface of the plating layer 120 are covered, so that any area that may be touched on the surface of the optical module housing is not stained.

An embodiment of this application further provides an optical module. The optical module includes a circuit board and any optical module housing 11 shown in FIG. 3 and FIG. 4. The circuit board is located in the optical module housing 11.

Electronic components, such as a light source, an optical digital signal processing (optical digital signal processor, ODSP) chip, an integrated coherent transmitter (integrated coherent transmitter, ICT) chip, and an integrated coherent receiver (integrated coherent receiver, ICR) chip, are connected to the circuit board.

An embodiment of this application further provides an optical communication device. The optical communication device includes an optical module connector and the foregoing optical module, and the optical module is connected to the optical module connector.

The optical module provided in this embodiment of this application is compared with an optical module of a same model in a conventional technology. Pressure between the two optical modules and the heat sink is 20 N, and the two optical modules work at an ambient temperature of 25°C. Power consumption of the two optical modules is 26.5 W, and heat dissipation air volumes are 10 CFM. After working for same time, a temperature of the ODSP chip in the optical module provided in this embodiment of this application is 76.6°C, a temperature of the light source is 42.4°C, a temperature of the ICT chip is 49.5°C, and a temperature of the ICR chip is 49°C. However, temperatures of electronic components in the optical module in the conventional technology are 83.37°C, 44.27°C, 52.17°C, and 51.57°C, which are respectively reduced by 6.77°C, 1.87°C, 2.67°C, and 2.57°C.

It can be learned that, by reducing the roughness of the surface of the optical module housing 11, especially the roughness of the contact area 11a, the roughness Ra is reduced to not greater than 0.6 µm, so that a heat dissipation effect of the optical module 10 can be evidently improved, and this solution further has a feature of low costs.

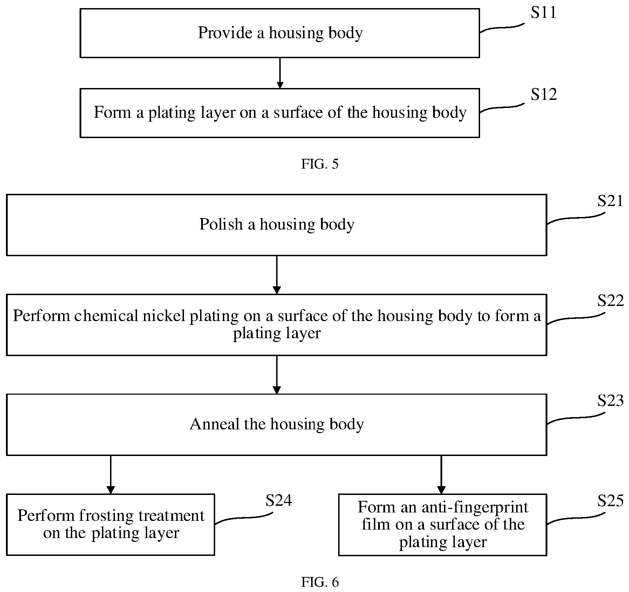

FIG. 5 is a flowchart of a method for manufacturing an optical module housing according to an embodiment of this application. The method is for manufacturing the optical module housing shown in FIG. 3 or FIG. 4. As shown in FIG. 5, the manufacturing method includes the following steps.

In step S11, a housing body 110 is provided.

The optical module housing includes an upper housing 111 and a lower housing 112. An example in which the upper housing 111 and the lower housing 112 are separated components is used. The housing body 110 also has a split structure, including an upper housing body 1101 and a lower housing body 1102. The upper housing body 1101 and the lower housing body 1102 may be separately manufactured.

For example, the upper housing body 1101 and the lower housing body 1102 are manufactured in a die casting manner. For an optical module housing in which the upper housing 111 and the lower housing 112 are a whole, the upper housing body 1101 and the lower housing body 1102 are also a whole, and the entire optical module housing may be manufactured in the die casting manner.

In step S12, a plating layer 120 is formed on a surface of the housing body 110.

A roughness Ra of the plating layer 120 at least in a contact area 11a does not exceed 0.6 µm.

When the plating layer 120 is formed on the surface of the housing body 110, the upper housing body 1101 and the lower housing body 1102 may be separately processed, to form plating layers 120.

For example, the plating layers 120 may be formed on a surface of the upper housing body 1101 and a surface of the lower housing body 1102 separately by using a chemical plating manner.

Usually, a roughness Ra of an outer surface of the optical module housing 11 is 1.6 µm. For an optical module with high power, a thermal contact resistance between the optical module housing 11 and a heat sink 30 is large, and consequently, a temperature of the optical module is easily excessively high in a working process. In this embodiment of this application, the roughness Ra of the plating layer 120 in the contact area 11a is set not to exceed 0.6 µm, so that a gap between the optical module housing 11 and the heat sink 30 is smaller. This reduces the thermal contact resistance, facilitates heat exchange between the optical module housing 11 and the heat sink 30, accelerates heat dissipation of the optical module, and avoids the excessively high temperature of the optical module.

Thicknesses of the plating layers 120 formed on the surface of the upper housing body 1101 and the surface of the lower housing body 1102 may be 1 µm to 20 µm. The thicknesses of the plating layers 120 affect abrasion resistance and corrosion resistance of the optical module housing 11. If the thicknesses are set to an excessively thin value, improvement of the abrasion resistance and the corrosion resistance is not evident. If the thicknesses are set to an excessively thick value, manufacturing costs are increased.

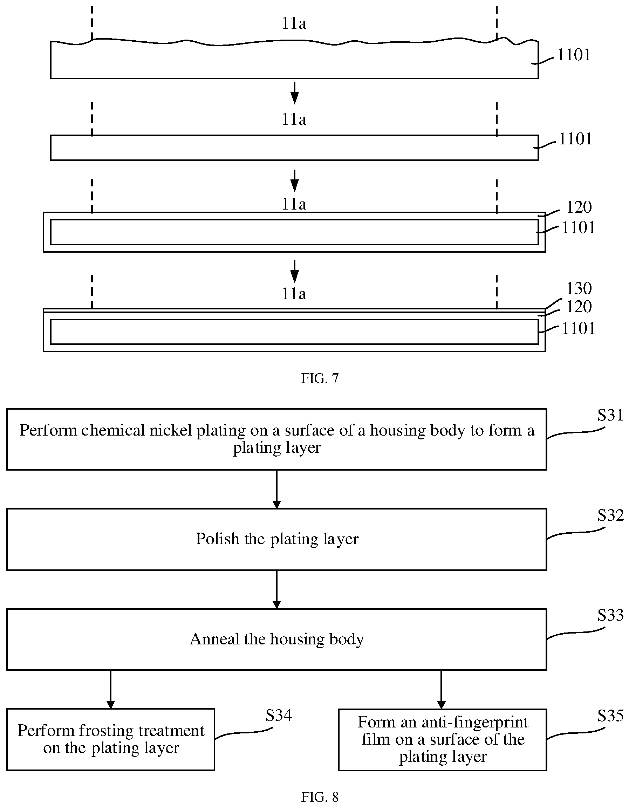

FIG. 6 is a flowchart of a method for manufacturing an optical module housing according to an embodiment of this application. The method is for manufacturing the optical module housing shown in FIG. 3 or FIG. 4. The method is performed after step S11. FIG. 7 is a schematic diagram of a manufacturing process of an optical module housing according to an embodiment of this application. The figure illustrates the manufacturing process of the optical module housing by using an example in which an upper housing 111 of a plating layer 120 that is a nickel plating layer is manufactured. In another example, the plating layer 120 may alternatively be a chromium plating layer. With reference to FIG. 6 and FIG. 7, the manufacturing method includes the following steps.

In step S21, a housing body 110 is polished.

The housing body 110 is polished, to reduce a roughness of the housing body 110. This helps reduce a roughness of a subsequently formed plating layer 120. In step S21, through polishing, the roughness Ra of the housing body 110 at least in a contact area 11a does not exceed 0.6 µm. In this way, the roughness Ra of the subsequently formed plating layer 120 in the contact area 11a cannot exceed 0.6 µm.

In an example, an example in which the upper housing 111 is manufactured when the upper housing 111 and a lower housing 112 are separated components is used. As shown in FIG. 7, in step S21, an upper housing body 1101 may be polished, to reduce a roughness of the contact area 11a.

During polishing, an outer surface of the upper housing 111 may be polished, or an outer surface and an inner surface of the upper housing 111 may be polished. When the outer surface and the inner surface are polished, a roughness of the inner surface may be greater than a roughness of the outer surface. Because the inner surface is not exposed to the outside and does not be in contact with a heat sink, the roughness does not need to be controlled at a very low level, to reduce a workload and reduce costs.

When the housing body 110 is polished, mechanical polishing and/or laser polishing may be used.

In step S22, chemical nickel plating is performed on a surface of the housing body 110 to form the plating layer 120.

In comparison with electroplating, the plating layer 120 formed through the chemical nickel plating is more uniform in thickness and lower in cost. The thickness of the plating layer 120 formed on the surface of the housing body 110 may be 1 µm to 20 µm. The thickness of the plating layer 120 affects abrasion resistance and corrosion resistance of the optical module housing 11. If the thickness is set to an excessively thin value, improvement of the abrasion resistance and the corrosion resistance is not evident. If the thickness is set to an excessively thick value, manufacturing costs are increased. Density of the plating layer 120 may be greater than or equal to 7 g/cm³, for example, 7.9 g/cm³ to 8.5 g/cm³.

In step S23, the housing body 110 is annealed.

Through annealing treatment, a hardness of the plating layer 120 can be improved, to improve abrasion resistance of the plating layer 120. Through annealing treatment, the hardness of the plating layer 120 is not less than 900 HV0.1.

After the housing body 110 is annealed, step S24 or step S25 may be further performed.

In step S24, frosting treatment is performed on the plating layer 120.

Through the frosting treatment, a surface of the plating layer 120 is dented or bulged, so that the surface of the plating layer 120 is made into a frosted surface. The frosted surface may be used as an anti-fingerprint structure, to prevent the surface of the plating layer 120 from being stained by a fingerprint. The frosted surface can further avoid a scratch on the surface of the plating layer 120. This improves appearance quality of an optical module.

The frosting treatment may be carried out by a shot blasting process or a sand blasting process. In a process of the frosting treatment, a particle size and a hardness of an abrasive are properly selected, a diameter of a nozzle of a spray gun is properly selected, and spray pressure, a distance between the nozzle of the spray gun and the surface of the plating layer 120, processing time, and the like are properly set, so that after the frosting treatment, a roughness Ra of the frosted surface does not exceed 0.6 µm, a gap between the optical module housing 11 and the heat sink 30 is small, and heat exchange can still be performed quickly between the optical module housing 11 and the heat sink 30.

For example, the abrasive may be rounded steel grit.

In step S25, an anti-fingerprint film 130 is formed on the surface of the plating layer 120.

The anti-fingerprint film 130 may be, but is not limited to, a nanoparticle coating, a self-assembled monomolecular film, and an oxide coating.

The anti-fingerprint film 130 is formed on the surface of the plating layer 120 as an anti-fingerprint structure, to prevent the surface of the plating layer 120 from being stained by a fingerprint. The anti-fingerprint film 130 can also avoid a scratch on the surface of the plating layer 120. This improves the appearance quality of the optical module.

The anti-fingerprint film 130 may be formed on any area that may be touched on the surface of the plating layer 120, or may cover all areas on the surface of the plating layer 120.

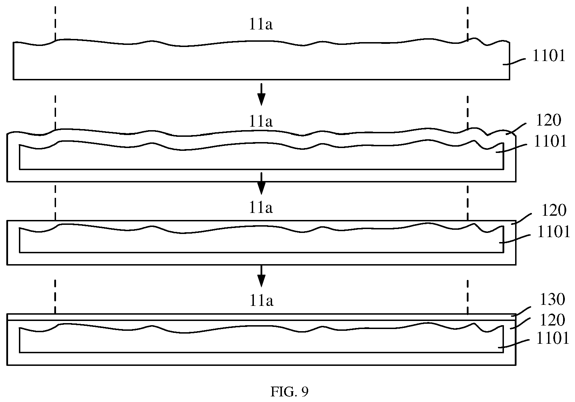

FIG. 8 is a flowchart of a method for manufacturing an optical module housing according to an embodiment of this application. The method is for manufacturing the optical module housing shown in FIG. 3 or FIG. 4. The method is performed after step S11. FIG. 9 is a schematic diagram of a manufacturing process of an optical module housing according to an embodiment of this application. The figure illustrates the manufacturing process of the optical module housing by using an example in which an upper housing 111 is manufactured. With reference to FIG. 8 and FIG. 9, the manufacturing method includes the following steps.

In step S31, chemical nickel plating is performed on a surface of a housing body 110 to form a plating layer 120.

In an example, an example in which the upper housing 111 is manufactured when the upper housing 111 and a lower housing 112 are separated components is used. As shown in FIG. 9, in step S31, the plating layer 120 may be formed on a surface of an upper housing body 1101.

A manner of forming the plating layer 120 may be similar to the foregoing step S22, and details are not described herein again.

A thickness of the plating layer 120 formed in step S31 may be greater than the thickness of the plating layer 120 formed in step S22. For example, the thickness of the plating layer 120 formed in step S31 may be 25 µm to 50 µm.

In step S32, the plating layer 120 is polished.

In step S31, a thick plating layer 120 is formed, so that a sufficient margin is reserved for polishing the plating layer 120. This avoids that the plating layer 120 in a partial area is completely removed in a polishing process.

The plating layer 120 is polished to reduce a roughness of the plating layer 120, so that a roughness Ra of the plating layer 120 at least in a contact area 11a does not exceed 0.6 µm. A thickness of the polished plating layer 120 may be 1 µm to 20 µm.

For example, the example in which the upper housing 111 and the lower housing 112 are the separated components is used. During polishing, the plating layer 120 on an outer surface of the upper housing body 1101 may be polished, or the plating layer 120 on an outer surface and an inner surface of the upper housing body 1101 may be polished. When the outer surface and the inner surface are polished, a roughness of the inner surface may be greater than a roughness of the outer surface. Because the inner surface is not exposed to the outside and does not be in contact with a heat sink, the roughness does not need to be controlled at a very low level, to reduce a workload and reduce costs.

When the plating layer 120 is polished, mechanical polishing and/or laser polishing may be used.

A difference between this example and the example shown in FIG. 6 lies in that, in this example, the plating layer 120 is first formed on the housing body 110, and then polishing is performed. Because the housing body 110 is not polished before the plating layer 120 is formed, the surface of the housing body 110 is rough, so that the plating layer 120 is more closely attached to the surface of the housing body 110. After the plating layer 120 is formed, polishing can ensure that the roughness of the plating layer 120 meets a requirement.

In step S33, the housing body 110 is annealed.

Step S33 may be the same as step S22, and details are not described herein again.

After the housing body 110 is annealed, step S34 or step S35 may be further performed.

In step S34, frosting treatment is performed on the plating layer 120.

Step S34 may be the same as step S24, and details are not described herein again.

In step S35, an anti-fingerprint film 130 is formed on a surface of the plating layer 120.

Step S35 may be the same as step S25, and details are not described herein again.

Terms used in implementations of this application are only used to explain embodiments of this application, and are not intended to limit this application. Unless otherwise defined, technical terms or scientific terms used in the implementations of this application should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. "Connection", "link" or the like is not limited to a physical or mechanical connection, but may include an electrical connection, whether directly or indirectly. Terms such as "up", "down", "left", and "right" are merely used to indicate a relative positional relationship. When an absolute position of an object described changes, the relative positional relationship may also change accordingly.

The foregoing descriptions are merely an embodiment of this application, but are not intended to limit this application. Any modification, equivalent replacement, or improvement made without departing from the spirit and principle of this application should fall within the protection scope of this application.

## Claims

1. An optical module housing, comprising a housing body (110) and a plating layer (120), wherein the plating layer (120) is located on a surface of the housing body (110), a roughness Ra of the plating layer (120) at least in a contact area (11a) does not exceed 0.6 µm, and the contact area (11a) is an area that is of the optical module housing and that is configured to be in contact with a heat sink.

2. The optical module housing according to claim 1, wherein a hardness of the plating layer (120) is not less than 900 HV0.1.

3. The optical module housing according to claim 1 or 2, wherein an anti-fingerprint structure is provided on an outer surface of the optical module housing.

4. The optical module housing according to claim 3, wherein a surface of the plating layer (120) is a frosted surface, and the anti-fingerprint structure comprises the frosted surface.

5. The optical module housing according to claim 3, wherein the anti-fingerprint structure comprises an anti-fingerprint film (130), and the anti-fingerprint film (130) is located on a surface of the plating layer (120).

6. A method for manufacturing an optical module housing, wherein the optical module housing has a contact area (11a), the contact area (11a) is configured to be in contact with a heat sink, and the manufacturing method comprises:
providing a housing body (110); and
forming a plating layer (120) on a surface of the housing body (110), wherein a roughness Ra of the plating layer (120) at least in the contact area (11a) does not exceed 0.6 µm.

7. The manufacturing method according to claim 6, wherein before the forming a plating layer (120) on a surface of the housing body (110), the manufacturing method further comprises:
polishing the housing body (110) to enable a roughness Ra of the housing body (110) at least in the contact area (11a) not to exceed 0.6 µm.

8. The manufacturing method according to claim 6 or 7, wherein after the forming a plating layer (120) on a surface of the housing body (110), the manufacturing method further comprises:
polishing the plating layer (120).

9. The manufacturing method according to any one of claims 6 to 8, further comprising:
performing frosting treatment on the plating layer (120).

10. The manufacturing method according to any one of claims 6 to 8, further comprising:
forming an anti-fingerprint film (130) on a surface of the plating layer (120).

11. An optical module, comprising a circuit board and the optical module housing (11) according to any one of claims 1 to 5, wherein the circuit board is located in the optical module housing (11).

12. An optical communication device, comprising an optical module connector and the optical module according to claim 11, wherein the optical module is connected to the optical module connector.
